(19) Europäisches Patentamt
European Patent Office
Office européen des brevets

(11) EP 0 492 367 B1

(12) **EUROPÄISCHE PATENTSCHRIFT**

(45) Veröffentlichungstag und Bekanntmachung des Hinweises auf die Patenterteilung:
**27.09.2000 Patentblatt 2000/39**

(51) Int. Cl.[7]: **A01N 47/36**, A01N 43/50, A01N 25/32

(21) Anmeldenummer: **91121623.2**

(22) Anmeldetag: **17.12.1991**

(54) **Mischungen aus Herbiziden und Antidots**
Mixtures of herbicides and antidotes
Mélanges d'herbicides et d'antidotes

(84) Benannte Vertragsstaaten:
**AT BE CH DE ES FR GB IT LI NL**

(30) Priorität: **21.12.1990 DE 4041120**

(43) Veröffentlichungstag der Anmeldung:
**01.07.1992 Patentblatt 1992/27**

(60) Teilanmeldung:
**00100473.8 / 1 008 297**

(73) Patentinhaber:
**Aventis CropScience GmbH**
**65929 Frankfurt am Main (DE)**

(72) Erfinder:
- **Bauer, Klaus, Dr.**
**W-6450 Hanau (DE)**
- **Bieringer, Hermann, Dr.**
**W-6239 Eppstein/Taunus (DE)**

(56) Entgegenhaltungen:
**EP-A- 0 159 287** **WO-A-91/08202**
- **I.I.C., Band 17, Nr. 5, 1986, Seiten 630-634**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 492 367 B1

## Beschreibung

Die Erfindung betrifft das technische Gebiet der Pflanzenschutzmittel, insbesondere Wirkstoff-Antidot-Kombinationen, die hervorragend für den Einsatz gegen Schadpflanzen in Nutzpflanzenkulturen geeignet sind.

Einige neuere herbizide Wirkstoffe haben sehr gute Wirksamkeiten und Selektivitäten und können gegen ein weites Spektrum verschiedener Unkräuter und/oder Ungräser in speziellen Kulturpflanzenbeständen wie Sojabohne oder Mais oder Getreide eingesetzt werden. Andere Kulturpflanzen jedoch werden durch diese Herbizide geschädigt, so daß der Einsatz in solchen Kulturen gar nicht möglich ist oder doch nur in geringen Aufwandmengen, die nicht die optimale breite herbizide Wirksamkeit gewährleisten.

Solche Herbizide, deren Einsatzmöglichkeit beschränkt ist, sind beispielsweise einige Herbizide aus der Gruppe der Sulfonylharnstoffe und Imidazolinone. Herbizide dieser zwei Strukturgruppen sind insoweit verwandt, als sie in der Pflanze zum Teil gleiche Biosynthesewege im Stoffwechsel blockieren. Beide Herbizidklassen hemmen primär das Enzym Acetolactatsynthase (ALS), auch Acetohydroxysäuresynthase (AHAS) genannt, ein wichtiges Schlüsselenzym, das bei der Biosynthese der verzweigtkettigen Aminosäuren Valin, Leucin und Isoleucin eine wichtige Rolle spielt (siehe z. B. Dale L. Shaner et al.: Imidazolinones, Potent Inhibitors of Acetohydroxyacid Synthase, Plant. Physiol. 76 (1984) 545-546; E.M. Beyer et al. "Sulfonylurea Herbicides" in "Herbicides; Chemistry, Degradation and Mode of Action" Vol. 3, M. Dekker, Inc., Ed. by P.G. Kearney and D.D. Kaufmann, New York, 1987).

Obwohl Imidazolinone und Sulfonylharnstoffe hinsichtlich anderer Eigenschaften wie Aufwandmenge, Bodenwirksamkeit etc. sehr verschieden sind, so daß ein Äquivalenz nicht gegeben ist, können die Herbizide aus diesen Stoffklassen auf Grund des zum Teil gleichartigen Wirkungsmechanismus im pflanzlichen Stoffwechsel gemeinsame Eigenschaften aufweisen. So können beispielsweise viele Herbizide der genannten Stoffklassen nicht selektiv in Getreidekulturen und/oder nicht in Mais eingesetzt werden, weil diese Kulturpflanzen zumindest in den erwünschten Dosierungen, die für eine breite herbizide Wirksamkeit gegen Unkräuter und Ungräser erforderlich sind, geschädigt werden.

Es wäre wünschenswert, wenn man die genannten Kulturpflanzen mit Hilfe eines Safeners (oder Antidots) vor der schädigenden Wirkung der genannten Herbizide schützen könnte, ohne die Wirkung der genannten Herbizide gegen die Schadpflanzen wesentlich zu vermindern.

Es sind bereits eine große Zahl strukturell unterschiedlichster Safener bekannt, die in Kombination mit Herbiziden eingesetzt werden. Für die Kombination mit Sulfonylharnstoffen oder Imidazolinonen in Getreidekulturen (z. B. Weizen, Gerste) oder Mais sind diese meist jedoch nicht geeignet.

Aus EP-A-94349 sind Safener der Chinolin-8-oxy-alkancarbonsäure-Reihe bekannt, die vor allem für den Einsatz mit Aryloxy- und Heteroaryloxy-phenoxycarbonsäure-Herbiziden empfohlen werden. Sulfonylharnstoffe werden darin unter einer Vielzahl von strukturell anderen Herbiziden als mögliche Herbizide für die Kombination mit den Safenem erwähnt; zwei Beispiele, wobei Weizensamen mit einem Chinolinoxyessigsäuremethylester gebeizt und die Anbaufläche mit einem Sulfonylharnstoff im Nachauflaufverfahren bzw. im Vorauflaufverfahren behandelt werden, sind auch erwähnt. Die Safener-Wirkung der bekannten Sulfonylharnstoff-Safener-Kombination ist jedoch nicht ausreichend, insbesondere nicht für den Einsatz des Safeners und des Herbizids im Nachauflaufverfahren in Getreide, wie Weizen oder Gerste, oder in Mais.

EP-A-333131 betrifft Phenylpyrazolcarbonsäurederivate, die als Safener in Kombination mit Herbiziden vom Typ der Phenoxyphenoxycarbonsäureester, Chloracetanilide, Thiocarbamate und Dimedonderivate beschrieben sind. Eine Safenerwirkung für Sulfonylharnstoffe oder Imidazolinone ist dort nicht erwähnt.

EP-A-0147365 betrifft selektive herbizide Mittel, welche ein substituiertes N-Phenyl-N'-pyrimidinyl(oder -triazinyl)-sulfonylharnstoff-Herbizid und einen Safener aus der Gruppe, bestehend aus Cyanomethoxyimino-benzacetonitri, N,N-Diallyldichloracetamid, 2-Chlor-5-benzyloxycarbonyl-3-trifluormethylthiazol, 1,8-Naphthalindicarbonsäureanhydrid und 3-N-Dichloracetyl-2,2-dimethyl-1,3-oxazolidin enthalten.

Aus US-A-4851031 ist bekannt, Imidazolinon-Herbizide wie Imazaquin, Imazapyr oder Imazethapyr mit Safenern aus der Chinolin-8-oxy-alkancarbonsäure-Reihe zur Bekämpfung von Unkräutern in Getreide einzusetzen, und zwar vorzugsweise nach dem Verfahren der Saatbeizung, aber auch durch Blattapplikation (Nachauflaufapplikation) von Safener und Herbizid gemeinsam. Andere Kulturpflanzen wie Mais werden dabei nur nach der Technik der Saatbeizung mit konkretem Beispiel aufgeführt.

Aus dem Artikel von M. Barrett in "Crop Safeners for Herbizides" von K.K Hatzios und R.E. Hoagland (Editors) Academic Press, San Diego, CA. USA 1989, Kap. 9, S. 209-220 und dem Artikel von K K. Hatzios in "Herbicides Resistance in Weeds and Crops" (Editors: J.C. Caseley, G. W. Cussans, R.K. Atkin) Butterworth-Heinemann, Oxford, GB 1991, S. 293-303 ist bekannt, daß die Schutzwirkung von Safenern gegen Herbizidschäden der Imidazolinone besser ist, wenn die Herbizide post-emergent, die Safener aber vorher als Saatbeizmittel oder zur Aussaat der Kultur (pre-emergent) eingesetzt werden. Safenerwirkungen, die nach der Methode der Saatbeizung erreicht worden sind, lassen deshalb nicht erwarten, daß bei Einsatz des Safeners zusammen mit dem Herbizid im Nachauflaufverfahren eine vergleichbar effektive oder bessere Safenerwirkung erreicht werden kann.

Ganz unerwartet haben nun experimentelle Arbeiten gezeigt, daß Kulturpflanzen wie z. B. Weizen und Gerste sowie Mais vor unerwünschten Schäden der oben erwähnten Herbizide geschützt werden können, wenn sie zusammen mit bestimmten Verbindungen ausgebracht werden, die als herbizide Antidots oder Safener wirken.
Weiterhin wurde gefunden, daß Imidazolinone und bestimmte Safener der Chinolin-8-oxy-alkancarbonsäure-Reihe besonders für die selektive Bekämpfung von Schadpflanzen in Maiskulturen im Nachauflaufverfahren geeignet sind.

Gegenstand der Erfindung sind daher herbizide Mittel, welche

A) ein oder mehrere Herbizide aus der Gruppe der Sulfonylharnstoffe und Imidazolinone und
B) eine oder mehrere Verbindungen der Formel B1,

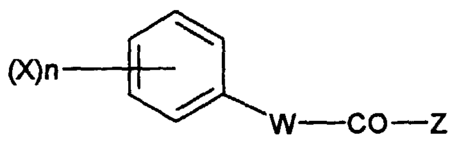

(B1)

worin

X Wasserstoff, Halogen, $C_1$-$C_4$-Alkyl, $C_1$-$C_4$-Alkoxy, Nitro oder $C_1$-$C_4$-Halogenalkyl ist,
Z $OR^1$ oder $SR^1$, vorzugsweise ein Rest der Formel $OR^1$ ist,
$R^1$ Wasserstoff, $C_1$-$C_{18}$-Alkyl, $C_3$-$C_{12}$-Cycloalkyl, $C_2$-$C_8$-Alkenyl oder $C_2$-$C_8$-Alkinyl ist, wobei jeder vorstehenden C-haltigen Reste unabhängig voneinander unsubstituiert oder ein- oder mehrfach durch Reste aus der Gruppe enthaltend Halogen, Hydroxy, $C_1$-$C_8$-Alkoxy, $C_1$-$C_8$-Alkylthio, $C_2$-$C_8$-Alkenylthio, $C_2$-$C_8$-Alkinylthio, $C_2$-$C_8$-Alkenyloxy, $C_2$-$C_8$-Alkinyloxy, $C_3$-$C_7$-Cycloalkyl, $C_3$-$C_7$-Cycloalkoxy, Cyano, Mono- und Di-($C_1$-$C_4$-alkyl)-amino, ($C_1$-$C_8$-Alkoxy)-carbonyl, ($C_2$-$C_8$-Alkenyloxy)-carbonyl, ($C_1$-$C_8$-Alkylthio)-carbonyl, ($C_2$-$C_8$-Alkinyloxy)-carbonyl, ($C_1$-$C_8$-Alkyl)-carbonyl, ($C_2$-$C_8$-Alkenyl)-carbonyl, ($C_2$-$C_8$-Alkinyl)-carbonyl, 1-(Hydroxyimino)-$C_1$-$C_6$-alkyl, 1-($C_1$-$C_4$-Alkylimino)-$C_1$-$C_6$-alkyl, 1-($C_1$-$C_4$-Alkoxyimino)-$C_1$-$C_6$-alkyl, ($C_1$-$C_8$-Alkyl)-carbonylamino, ($C_2$-$C_8$-Alkenyl)-carbonylamino, ($C_2$-$C_8$-Alkinyl)-carbonylamino, Aminocarbonyl, ($C_1$-$C_8$-Alkyl)-aminocarbonyl, Di-($C_1$-$C_8$-alkyl)-aminocarbonyl, ($C_2$-$C_6$-Alkenyl)-aminocarbonyl, ($C_2$-$C_6$-Alkinyl)-aminocarbonyl, ($C_1$ -$C_8$-Alkoxy)-carbonylamino, ($C_1$-$C_8$-Alkyl)-amino-carbonylamino, $C_1$-$C_6$-Alkylcarbonyloxy, das unsubstituiert oder durch Halogen, $NO_2$, $C_1$-$C_4$-Alkoxy oder gegebenenfalls substituiertes Phenyl substituiert ist, ($C_2$-$C_6$-Alkenyl)-carbonyloxy, ($C_2$-$C_6$-Alkinyl)-carbonyloxy, $C_1$-$C_8$-Alkylsulfonyl, Phenyl, Phenyl-$C_1$-$C_6$-alkoxy, Phenyl-($C_1$-$C_6$-alkoxy)-carbonyl, Phenoxy, Phenoxy-$C_1$-$C_6$-alkoxy, Phenoxy-($C_1$-$C_6$-alkoxy)-carbonyl, Phenylcarbonyloxy, Phenylcarbonylamino, Phenyl-($C_1$-$C_6$-alkyl)-carbonylamino, wobei die letztgenannten 9 Reste im Phenylring unsubstituiert oder ein- oder mehrfach durch Reste aus der Gruppe Halogen, $C_1$-$C_4$-Alkyl, $C_1$-$C_4$-Alkoxy, $C_1$-$C_4$-Halogenalkyl, $C_1$-$C_4$-Halogenalkoxy und Nitro substituiert sind, und Reste der Formeln $-SiR'_3$, $-O-SiR'_3$, $(R')_3Si$-$C_1$-$C_6$-alkoxy, $-CO-O-NR'_2$, $-O-N=CR'_2$, $-N=CR'_2$, $-O-NR'_2$, $-CH(OR')_2$ und $-O-(CH_2)_m-CH(OR')_2$, worin die R' in den genannten Formeln unabhängig voneinander Wasserstoff, $C_1$-$C_4$-Alkyl oder Phenyl, das unsubstituiert oder ein- oder mehrfach durch Reste aus der Gruppe Halogen, $C_1$-$C_4$-Alkyl, $C_1$-$C_4$-Alkoxy, $C_1$-$C_4$-Halogenalkyl, $C_1$-$C_4$-Halogenalkoxy und Nitro substituiert ist, oder paarweise eine $C_2$-$C_6$-Alkylenkette und m = 0 bis 6 bedeuten, und einen Alkoxyrest der Formel R''O-CHR'''(OR'')-$C_1$-$C_6$-alkoxy, worin die R'' unabhängig voneinander $C_1$-$C_4$-Alkyl oder zusammen eine $C_1$-$C_6$-Alkylengruppe und R''' Wasserstoff oder $C_1$-$C_4$-Alkyl bedeuten, substituiert ist,
n eine ganze Zahl von 1 bis 5, vorzugsweise 1 bis 3 ist und
W ein divalenter heterocyclischer Rest mit 5 Ringatomen der Formel W4 ist,

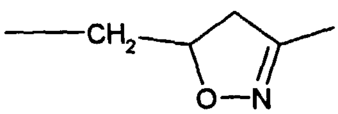

(W4)

in einer wirksamen Menge enthalten.

Von besonderem Interesse sind erfindungsgemäße herbizide Mittel, wobei in den Verbindungen der Formel B1,

$R^1$ Wasserstoff, $C_1$-$C_{12}$-Alkyl, $C_3$-$C_7$-Cycloalkyl, $C_2$-$C_8$-Alkenyl oder $C_2$-$C_8$-Alkinyl ist, wobei jeder der vorstehenden C-haltigen Reste unabhängig voneinander unsubstituiert oder ein- oder mehrfach durch Halogen oder ein- oder zweifach, vorzugsweise bis zu einfach durch Reste aus der Gruppe enthaltend Hydroxy, $C_1$-$C_4$-Alkoxy, $C_1$-$C_4$-Alkylthio, $C_2$-$C_4$-Alkenyloxy, $C_2$-$C_4$-Alkinyloxy, Mono- und Di-($C_1$-$C_2$-alkyl)-amino, ($C_1$-$C_4$-Alkoxy)-carbonyl, ($C_2$-$C_4$-Alkenyloxy)-carbonyl, ($C_2$-$C_4$-Alkinyloxy)-carbonyl, ($C_1$-$C_4$-Alkyl)-carbonyl, ($C_2$-$C_4$-Alkenyl)-carbonyl, ($C_2$-$C_4$-Alkinyl)-carbonyl, 1-(Hydroxyimino)-$C_1$-$C_4$-alkyl, 1-($C_1$-$C_4$-Alkylimino)-$C_1$-$C_4$-alkyl, 1-($C_1$-$C_4$-Alkoxyimino)-$C_1$-$C_4$-alkyl, $C_1$-$C_4$-Alkylsulfonyl, Phenyl, Phenyl-$C_1$-$C_4$-alkoxy, Phenyl-($C_1$-$C_4$-alkoxy)-carbonyl, Phenoxy, Phenoxy-$C_1$-$C_4$-alkoxy, Phenoxy-($C_1$-$C_4$-alkoxy)-carbonyl, wobei die letztgenannten 6 Reste im Phenylring unsubstituiert oder ein- oder mehrfach durch Reste aus der Gruppe Halogen, $C_1$-$C_2$-Alkyl, $C_1$-$C_2$-Alkoxy, $C_1$-$C_2$-Halogenalkyl, $C_1$-$C_2$-Halogenalkoxy und Nitro substituiert sind, und Reste der Formeln -SiR'$_3$, -O-N=CR'$_2$, -N=CR'$_2$ und -O-NR'$_2$, worin die R' in den genannten Formeln unabhängig voneinander Wasserstoff, $C_1$-$C_2$-Alkyl oder Phenyl, das unsubstituiert oder ein- oder mehrfach durch Reste aus der Gruppe Halogen, $C_1$-$C_2$-Alkyl, $C_1$-$C_2$-Alkoxy, $C_1$-$C_2$-Halogenalkyl, $C_1$-$C_2$-Halogenalkoxy und Nitro substituiert ist, oder paarweise eine $C_4$-$C_5$-Alkylenkette bedeuten, substituiert ist.

Von besonderem Interesse sind auch erfindungsgemäße herbizide Mittel, wobei in den Verbindungen der Formel B1

X Wasserstoff, Halogen, Methyl, Ethyl, Methoxy, Ethoxy oder $C_1$-$C_2$-Halogenalkyl, vorzugsweise Wasserstoff, Halogen oder $C_1$-$C_2$-Halogenalkyl,

bedeuten.

Bevorzugt sind erfindungsgemäße herbizide Mittel, wobei in den Verbindungen der Formel B1,

X Wasserstoff, Halogen, Nitro oder $C_1$-$C_4$-Halogenalkyl ist,
n eine Zahl von 1 bis 3 ist,
Z ein Rest der Formel $OR^1$ ist,
$R^1$ Wasserstoff, $C_1$-$C_8$-Alkyl oder $C_3$-$C_7$-Cycloalkyl ist, wobei jeder der vorstehenden C-haltigen Reste unabhängig voneinander unsubstituiert oder ein- oder mehrfach durch Reste aus der Gruppe Halogen oder ein- oder zweifach, vorzugsweise unsubstituiert oder einfach, durch Reste aus der Gruppe Hydroxy, $C_1$-$C_4$-Alkoxy, ($C_1$-$C_4$-Alkoxy)-carbonyl, $C_2$-$C_6$-Alkenyloxy-carbonyl, ($C_2$-$C_6$-Alkinyloxy)-carbonyl, 1-(Hydroxyimino)-$C_1$-$C_4$-alkyl, 1-($C_1$-$C_4$-Alkylimino)-$C_1$-$C_4$-alkyl, 1-($C_1$-$C_4$-Alkoxyimino)-$C_1$-$C_4$-alkyl, und Reste der Formeln -SiR'$_3$, -O-N=CR'$_2$, -N=CR'$_2$ und -O-NR'$_2$, worin die R' in den genannten Formeln unabhängig voneinander Wasserstoff oder $C_1$-$C_4$-Alkyl oder paarweise eine $C_4$-$C_5$-Alkylenkette bedeuten, substituiert ist.

Besonders bevorzugt sind auch erfindungsgemäße herbizide Mittel mit Verbindungen der Formel B1, worin

W W4,
X Wasserstoff, Halogen, Nitro, $C_1$-$C_4$-Alkyl, $C_1$-$C_2$-Halogenalkyl, vorzugsweise $CF_3$, oder $C_1$-$C_4$-Alkoxy,
n 1 bis 3,
Z ein Rest der Formel $OR^1$,
$R^1$ Wasserstoff, $C_1$-$C_4$-Alkyl, oder ($C_1$-$C_4$-Alkoxy)-carbonyl-$C_1$-$C_4$-alkyl, vorzugsweise ein Rest der Formel ($C_1$-$C_4$-Alkoxy)-CO-$CH_2$-, ($C_1$-$C_4$-Alkoxy)-CO-C($CH_3$)H-, HO-CO-$CH_2$ oder HO-CO-C($CH_3$)H,

bedeuten.

In den Formeln sind Alkyl, Alkenyl und Alkinyl geradkettig oder verzweigt; entsprechendes gilt für substituierten Alkyl-, Alkenyl- und Alkinylreste wie Haloalkyl, Hydroxyalkyl, Alkoxycarbonyl etc.; Alkyl bedeutet z. B. Methyl, Ethyl, n- und i-Propyl, n-, i-, t- und 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl bedeutet z. B. Allyl, 1-Methylprop-2-en-1-yl, But-2-en-1-yl, But-3-en-1-yl, 1-Methyl-but-3-en und 1-Methyl-but-2-en; Alkinyl bedeutet z. B. Propargyl, But-2-in-1-yl, But-3-in-1-yl, 1-Methyl-but-3-in; Halogen bedeutet Fluor, Chlor, Brom oder Iod, vorzugsweise Fluor, Chlor oder Brom, besonders Fluor oder Chlor; Haloalkyl, -alkenyl und -alkinyl bedeuten durch Halogen substituiertes Alkyl, Alkenyl bzw. Alkinyl, z. B. $CF_3$, $CHF_2$, $CH_2F$, $CF_3CF_2$, $CH_2FCHCl$, $CCl_3$, $CHCl_2$, $CH_2CH_2Cl$; Haloalkoxy ist z. B. $OCF_3$, $OCHF_2$, $OCH_2F$, $CF_3CF_2O$, $CF_3CH_2O$; gegebenenfalls substituiertes Phenyl ist Phenyl oder substituiertes Phenyl; substituiertes Phenyl ist Phenyl,

das ein- oder mehrfach durch Reste aus der Gruppe Halogen, $C_1$-$C_4$-Alkyl, $C_1$-$C_4$-Alkoxy, $C_1$-$C_4$-Halogenalkyl, $C_1$-$C_4$-Halogenalkoxy und Nitro substituiert ist, z. B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Die Verbindungen der Formel B1 sind aus WO-91/08202 (Internationale Patentanmeldung PCT/EP 90/01966) und dort zitierter Literatur bekannt oder können nach oder analog den dort beschriebenen Verfahren hergestellt werden.

Als Herbizide des Typs A eignen sich erfindungsgemäß Sulfonylharnstoffderivate, die allein nicht oder nicht optimal in Getreidekulturen und/oder Mais eingesetzt werden können, weil sie die Kulturpflanzen zu stark schädigen. Solche Sulfonylharnstoffe sind z. B.

1) Phenylsulfonylharnstoffe, wie z. B.

a) Chlorimuron-ethyl (siehe Agricultural Chemicals Book II "Herbicides" by W. T. Thompson, Thompson Publications, Fresno Californien, USA 1990, Seite 152); wird bisher in Sojabohnen, nicht jedoch in Getreide oder Mais eingesetzt;
b) Primisulfuron (CGA 136 872, siehe Brighton Crop Prot. Conf.- Weeds - 1989, S. 41 - 48),
c) 3-(4-Ethyl-6-methoxy-1,3,5-triazin-2-yl)-1-(2,3-dihydro-1,1-dioxo-2-methylbenzo[b]thiophen-7-sulfonyl)-harnstoff (siehe EP-A-79 683),
d) 3-(4-Ethoxy-6-ethyl-1,3,5-triazin-2-yl)-1-(2,3-dihydro-1,1-dioxo-2-methylbenzo[b]thiophen-7-sulfonyl)-harnstoff (siehe EP-A-79 683),
e) Tribenuron-methyl (siehe "The Pesticide Manual", British Crop Protection Council 9th Edition (1990/91), Seite 840),
f) Metsulfuron-methyl (siehe Proc. Int. Congr. Plant Prot., 10th, 1983, Vol. 1, 324),
g) Chlorsulfuron (siehe US-P 4 127 405; Weeds Weed Control, 1980, 21st, 24),
h) Triasulfuron (siehe "The Pesticide Manual" 9th Ed., S. 837) und
i) Sulfometuron-methyl (siehe "The Pesticide Manual" 9th Ed., S. 774);

2) Thienylsulfonylharnstoffe wie z. B.
Thifensulfuron-methyl (siehe Agricultural Chemicals Book II "Herbicides" by W. T. Thompson, Thompson Publications, Fresno Californien, USA 1990, Seite 155);

3) Pyrazolylsulfonylharnstoffe wie z. B.

a) Pyrazosulfuron-ethyl (NC 311, siehe "The Pesticide Manual" 9th Ed., S. 735) und
b) Methyl-3-chlor-5-(4,6-dimethoxypyrimidin-2-ylcarbamoylsulfamoyl)-1-methyl-pyrazol-4-carboxylat (siehe EP 282 613);

4) Sulfondiamid-Derivate wie z. B. Amidosulfuron und Strukturanaloge (siehe EP-A-0131258 und Z. Pfl.Krankh. Pfl.Schutz, Sonderheft XII, 489-497 (1990); wird bisher nicht in Mais eingesetzt;

5) Pyridylsulfonylharnstoffe wie z. B.

a) Nicosulfuron (SL-950, siehe Kimura et al., Brighton Crop Protection Conference - Weeds - 1989, S. 29 - 34); wird alleine nicht in Getreide eingesetzt;
b) DPX-E 9636 (siehe Brighton Crop Prot. Conf. - Weeds - 1989, S. 23 ff.); wird bisher nicht in Getreide eingesetzt;
c) Pyridylsulfonylharnstoffe, wie sie in den deutschen Patentanmeldungen P 4000503.8 (WO-91/10660) und P 4030577.5 beschrieben sind, vorzugsweise solche der Formel A1 oder deren Salze,

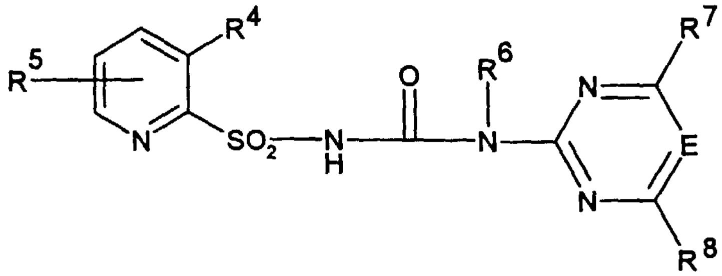

(A1)

worin

- E CH oder N, vorzugsweise CH,
- $R^4$ Iod oder $NR^9R^{10}$,
- $R^5$ H, Halogen, Cyano, $C_1$-$C_3$-Alkyl, $C_1$-$C_3$-Alkoxy, $C_1$-$C_3$-Haloalkyl, $C_1$-$C_3$-Haloalkoxy, $C_1$-$C_3$-Alkylthio, ($C_1$-$C_3$-Alkoxy)-$C_1$-$C_3$-alkyl, ($C_1$-$C_3$-Alkoxy)-carbonyl, Mono- oder Di-($C_1$-$C_3$-alkyl)-amino, $C_1$-$C_3$-Alkyl-sulfinyl oder -sulfonyl, $SO_2$-$NR^aR^b$ oder CO-$NR^aR^b$, insbesondere H,
- $R^a$,$R^b$ unabhängig voneinander H, $C_1$-$C_3$-Alkyl, $C_1$-$C_3$-Alkenyl, $C_1$-$C_3$-Alkinyl oder zusammen $-(CH_2)_4-$, $-(CH_2)_5-$ oder $-(CH_2)_2-O-(CH_2)_2-$,
- $R^6$ H oder $CH_3$,
- $R^7$ Halogen, $C_1$-$C_2$-Alkyl, $C_1$-$C_2$-Alkoxy, $C_1$-$C_2$-Haloalkyl, vorzugsweise $CF_3$, $C_1$-$C_2$-Haloalkoxy, vorzugsweise $OCHF_2$ oder $OCH_2CF_3$,
- $R^8$ $C_1$-$C_2$-Alkyl, $C_1$-$C_2$-Haloalkoxy, vorzugsweise $OCHF_2$, oder $C_1$-$C_2$-Alkoxy, und
- $R^9$ $C_1$-$C_4$-Alkyl und $R^{10}$ $C_1$-$C_4$-Alkylsulfonyl oder $R^9$ und $R^{10}$ gemeinsam eine Kette der Formel $-(CH_2)_3SO_2-$ oder $-(CH_2)_4SO_2-$

bedeuten,

6) Phenoxysulfonylharnstoffe, wie z.B. sie aus EP-A-0342569, EP-A-4163, EP-A-113956, US-A-4,678,500 und US-A-4,581,059 bekannt sind, vorzugsweise Alkoxyphenoxysulfonylharnstoffe der Formel A2 oder deren Salze,

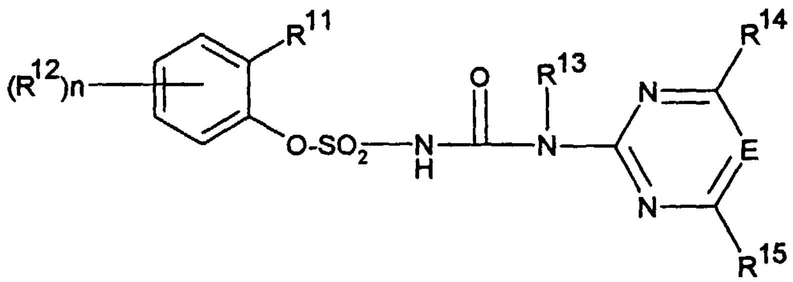

(A2)

worin

- E CH oder N, vorzugsweise CH,
- $R^{11}$ Ethoxy, Propoxy oder Isopropoxy,
- $R^{12}$ Wasserstoff, Halogen, $NO_2$, $CF_3$, CN, $C_1$-$C_4$-Alkyl, $C_1$-$C_4$-Alkoxy, $C_1$-$C_4$-Alkylthio oder ($C_1$-$C_3$-Alkoxy)-carbonyl, vorzugsweise in 6-Position am Phenylring,
- n 1, 2 oder 3, vorzugsweise 1,
- $R^{13}$ Wasserstoff, $C_1$-$C_4$-Alkyl oder $C_3$-$C_4$-Alkenyl,
- $R^{14}$, $R^{15}$ unabhängig voneinander Halogen, $C_1$-$C_2$-Alkyl, $C_1$-$C_2$-Alkoxy, $C_1$-$C_2$-Haloalkyl, $C_1$-$C_2$-Haloalkoxy oder ($C_1$-$C_2$-Alkoxy)-$C_1$-$C_2$-alkyl, vorzugsweise $OCH_3$ oder $CH_3$, bedeuten,

und andere verwandte Sulfonylharnstoffderivate und Mischungen daraus.

Als Herbizide des Typs A eignen sich erfindungsgemäß auch Wirkstoffe aus der Gruppe der Imidazolinon-Derivate, die auf Grund ihrer Selektivität in einigen Kulturen wie beispielsweise in Sojabohnen gut verträglich sind, nicht jedoch in Getreide- und/oder Maiskulturen eingesetzt werden können. Solche Wirkstoffe sind z. B.

11) Imazethapyr (siehe Ch. R. Worthing's "The Pesticide Manual" 8th Edition 1987, by British Crop Protection Council, Seite 473),

12) Imazaquin (siehe Ch. R. Worthing's "The Pesticide Manual" 8th Edition 1987, by British Crop Protection Council, Seite 474),

13) Imazethamethapyr (chemical name: rac-2-[4,5-dihydro-4-methyl-4-(1-methylethyl)-5-oxo-1H-imidazol-2-yl]-5-methyl-3-pyridine-carboxylic acid; siehe Weed Techn. 1991 (5), 430-433 und 434-438) und
andere verwandte Verbindungen und Mischungen daraus.

Auch Mischungen aus verschiedenen Sulfonylharnstoffderivaten und/oder verschiedenen Imidazolinonen sind erfindungsgemäß geeignet.

Folgende Gruppen von Verbindungen haben sich als Safener für die oben erwähnten Herbizide bewährt:

d) Verbindungen des Typs Dichlorbenzyl-2-isoxazolin-3-carbonsäure (d. h. der Formel B1, worin W = W4 und $(X)_n = 2,4\text{-}Cl_2$), vorzugsweise Verbindungen wie (B1-7) 5-(2,4-Dichlorbenzyl)-2-isoxazolin-3-carbonsäureethylester und verwandte Verbindungen, wie sie in WO-91/08202 (Int. Patentanmeldung Nr. PCT/EP 90/01966) beschrieben sind.

Die Safener (Antidote) der vorstehenden Gruppe d) reduzieren oder unterbinden phytotoxische Effekte, die beim Einsatz der Herbizide A) in Nutzpflanzenkulturen auftreten können, ohne die Wirksamkeit dieser Herbizide gegen Schapflanzen zu beeinträchtigen. Hierdurch kann das Einsatzgebiet herkömmlicher Pflanzenschutzmittel ganz erheblich erweitert und z. B. auf Kulturen wie Weizen, Gerste, Mais und andere Gramineen-Kulturen ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-mix-Verfahren) oder in beliebiger Reihenfolge nacheinander ausgebracht werden. Das Gewichtsverhältnis Safener:Herbizid kann innerhalb weiter Grenzen variieren und ist vorzugsweise im Bereich von 1:10 bis 10:1, insbesondere von 1:10 bis 5:1. Die jeweils optimalen Mengen an Herbizid und Safener sind vom Typ des verwendeten Herbizids oder vom verwendeten Safener sowie von der Art des zu behandelnden Pflanzenbestandes abhängig und lassen sich von Fall zu Fall durch entsprechende Vorversuche ermitteln.

Haupteinsatzgebiete für die Anwendung der Safener sind vor allem Getreidekulturen (Weizen, Roggen, Gerste, Hafer), Reis, Mais, Sorghum, aber auch Baumwolle und Sojabohne, vorzugsweise Getreide und Mais.

Die Safener vom Typ B können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid im Nachauflaufverfahren. Hierzu können Tankmischungen oder Fertigformulierungen eingesetzt werden.

Im Vergleich zur Methode mit Saatbeizung stellt die Methode mit gemeinsamer Anwendung von Herbizid und Safener im Nachauflaufverfahren einer bedeutenden praktischen Vorteil dar. Der Landwirt spart durch einen Arbeitsgang der gemeinsamen Ausbringung wesentliche Kosten und muß vor allem keine arbeitsaufwendige Saatgutbeizung durchführen, wozu spezielles Beizgerät erforderlich ist. Der arbeitstechnische Aufwand für die zusätzliche Ausbringung des Safeners ist demgegenüber praktisch zu vernachlässigen, zumal wenn Herbizid und Safener als fertige Formulierung eingesetzt und ausgebracht werden.

Die benötigten Aufwandmengen der Safener können je nach Indikation und verwendetem Herbizid innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden des genannten Typs A), das dadurch gekennzeichnet ist, daß eine wirksame Menge einer Verbindung der genannten Formeln (B1) vor, nach oder gleichzeitig mit dem Herbizid des genannten Typs A), vorzugsweise zusammen mit dem Herbizid des Typs A) im Nachauflaufverfahren, auf die Pflanzen, Pflanzensamen oder die Anbaufläche appliziert wird.

Die Verbindungen des Typs B) und deren Kombinationen mit einem oder mehreren der genannten Herbizide können auf verschiedene Art formuliert werden, je nachdem welche biologischen und/oder chemisch-physikalischen

Parameter vorgegeben sind. Als Formulierungsmöglichkeiten kommen beispielsweise in Frage: Spritzpulver (WP), emulgierbare Konzentrate (EC), wasserlösliche Pulver (SP), wasserlösliche Konzentrate (SL), konzentrierte Emulsionen (EW) wie Öl-in-Wasser und Wasser-in- Öl-Emulsionen, versprühbare Lösungen oder Emulsionen, Kapselsuspensionen (CS) Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v.Olphen "Intruduction to Clay Colloid Chemistry", 2nd Ed., J. Wiley & Sons, N.Y., Marsden "Solvents Guide", 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler "Chemische Technolgie", Band 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole und Fettamine, Fettalkoholpolyglykolethersulfate, Alkansulfonate oder Alkylarylsulfonate und Dispergiermittel, z.B. ligninsulfonsaures Natrium, 2,2,-dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid Kondensationsprodukte (z.B. Blockpolymere), Alkylpolyether, Sorbitanfettsäureester, Polyoxyethylensorbitan fettsäureester oder Polyoxethylensorbitester.

Stäubemittel erhält man durch Vermahlen des Wirkstoffes mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gewichtsprozent, insbesondere 0,1 bis 95 Gew.-%, Wirkstoffe der Typs B) oder des Antidot/Herbizid-Wirkstoffgemischs A) und B) und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-%, eines Tensides.

In Spritzpulvern beträgt die Wirkstoffkonzentration z.B. etwa 10 bis 90 Gew. %, der Rest zu 100 Gew.-% besteht aus üblichen Formulierungsbestandteilen. Bei emulgierbaren Konzentraten beträgt die Wirkstoffkonzentration etwa 1 bis 80 Gew.-% Wirkstoffe. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten wie wasserdispergierbaren Granulaten hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Granulate sowie versprühbare Lösungen werden vor der Anwendung üblicherweise nicht mehr mit weiteren inerten Stoffen verdünnt. Besonders gute Wirksamkeiten der erfindungsgemäßen Mittel können erzielt werden, wenn zusätzlich zu den in den Formulierungen enthaltenen Tensiden weitere Netzmittel in Konzentrationen von 0,1 bis 0,5 Gew.-% im Tank-mix-Verfahren zugesetzt werden, z. B. nichtionische Netzmittel oder Netzmittel vom Typ der Fettalkoholpolyolethersulfate (siehe z. B. Deutsche Patentanmeldung P

4029304.1). Mit den äußeren Bedingungen wie Temperatur, Feuchtigkeit, der Art des verwendeten Herbizids u.a. variiert die erforderliche Aufwandmenge der "Safener".

Folgende Beispiele dienen zur Erläuterung der Erfindung:

A. Formulierungsbeispiele

a) Ein Stäubmittel wird erhalten, indem man 10 Gew.-Teile einer Verbindung des Typs B) oder eines Wirkstoffgemischs aus einem Herbizid vom Typ A) und einem Safener vom Typ B) und 90 Gew.-Teile Talkum als Inertstoff mischt und in einer Schlagmühle zerkleinert.

b) Ein in Wasser leicht dispergierbares, benetzbares Pulver wird erhalten, indem man 25 Gewichtsteile einer Verbindung des Typs B) oder eines Wirkstoffgemischs aus einem Herbizid vom Typ A) und einem Safener vom Typ B), 64 Gewichtsteile kaolinhaltigen Quarz als Inertstoff, 10 Gewichtsteile ligninsulfonsaures Kalium und 1 Gew. -Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gewichtsteile einer Verbindung des Typs B) oder eines Wirkstoffgemischs aus einem Herbizid vom Typ A) und einem Safener vom Typ B), 6 Gew. -Teilen Alkylphenolpolyglykolether ($^R$Triton X 207), 3 Gew.-Teilen Isotridecanolpolyglykolether (8 EO) und 71 Gew.- Teilen paraffinischem Mineralöl (Siedebereich z.B. ca. 255 bis über 277°C) mischt und in einer Reibkugelmühle auf eine Feinheit von unter 5 Mikron vermahlt.

d) Ein emulgierbares Konzentrat wird erhalten aus 15 Gew. -Teilen einer Verbindung des Typs B) oder eines Wirkstoffgemischs aus einem Herbizid vom Typ A) und einem Safener vom Typ B), 75 Gew.Teilen Cyclohexanon als Lösemittel und 10 Gew. -Teilen oxethyliertes Nonylphenol als Emulgator.

e) Ein in Wasser dispergierbares Granulat wird erhalten, indem man

| | |
|---|---|
| 75 Gew.-Teile | einer Verbindung des Typs B) oder eines Wirkstoffgemischs aus Herbizid vom Typ A) und einem Safener vom Typ B), |
| 10 Gew.-Teile | ligninsulfonsaures Calcium, |
| 5 Gew.-Teile | Natriumlaurylsulfat, |
| 3 Gew.-Teile | Polyvinylalkohol und |
| 7 Gew.-Teile | Kaolin |

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

| | |
|---|---|
| 25 Gew.-Teile | einer Verbindung des Typs B) oder eines Wirkstoffgemischs aus einem Herbizid vom Typ A) und einem Safener vom Typ B), |
| 5 Gew.-Teile | 2,2'-dinaphthylmethan-6,6'-disulfonsaures Natrium, |
| 2 Gew.-Teile | oleoylmethyltaurinsaures Natrium, |
| 1 Gew.-Teil | Polyvinylalkohol, |
| 17 Gew.-Teile | Calciumcarbonat und |
| 50 Gew.-Teile | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

B. Biologische Beispiele

Die Kulturpflanzen, Unkräuter und Ungräser wurden im Freiland oder im Gewächshaus in Plastiktöpfen bis zum 4- bis 5-Blattstadium herangezogen und dann erfindungsgemäß mit Verbindungen vom Typ A) und B) im Nachauflaufverfahren behandelt. Die Verbindungen vom Typ A) und B) wurden dabei in Form wäßriger Suspensionen bzw. Emulsionen mit einer Wasseraufwandmenge von umgerechnet 300 l/ha ausgebracht. 4 Wochen nach der Behandlung

wurden die Pflanzen visuell auf jede Art von Schädigung durch die ausgebrachten Herbizide bonitiert, wobei insbesondere das Ausmaß der anhaltenden Wachstumshemmung berücksichtigt wurde. Die Bewertung erfolgte in Prozentwerten im Vergleich zu unbehandelten Kontrollen.

Die Ergebnisse veranschaulichen, daß die erfindungsgemäßen eingesetzten Verbindungen vom Typ B) starke Herbizidschäden an Kulturpflanzen effektiv reduzieren können. Selbst bei starken Überdosierungen der Herbizide werden bei den Kulturpflanzen auftretende schwere Schädigungen deutlich reduziert und geringere Schäden völlig aufgehoben. Mischungen aus Herbiziden und Verbindungen vom Typ B) eignen sich deshalb in ausgezeichneter Weise zur selektiven Unkrautbekämpfung in Kulturen wie Getreide und Mais.

## Patentansprüche

**1.** Herbizide Mittel, dadurch gekennzeichnet, daß sie

A) ein oder mehrere Herbizide aus der Gruppe der Sulfonylharnstoffe und Imidazolinone und
B) ein oder mehrere Verbindungen der Formel B1,

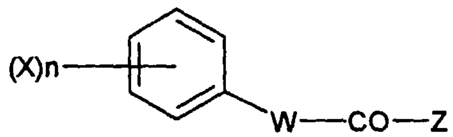

(B1)

worin

X Wasserstoff, Halogen, $C_1$-$C_4$-Alkyl, $C_1$-$C_4$-Alkoxy, Nitro oder $C_1$-$C_4$-Halogenalkyl ist,
Z $OR^1$ oder $SR^1$,
$R^1$ Wasserstoff, $C_1$-$C_{18}$-Alkyl, $C_3$-$C_{12}$-Cycloalkyl, $C_2$-$C_8$-Alkenyl oder $C_2$-$C_8$-Alkinyl ist, wobei jeder vorstehenden C-haltigen Reste unabhängig voneinander unsubstituiert oder ein- oder mehrfach durch Reste aus der Gruppe enthaltend Halogen, Hydroxy, $C_1$-$C_8$-Alkoxy, $C_1$-$C_8$-Alkylthio, $C_2$-$C_8$-Alkenylthio, $C_2$-$C_8$-Alkinylthio, $C_2$-$C_8$-Alkenyloxy, $C_2$-$C_8$-Alkinyloxy, $C_3$-$C_7$-Cycloalkyl, $C_3$-$C_7$-Cycloalkoxy, Cyano, Mono- und Di-($C_1$-$C_4$-alkyl)-amino, ($C_1$-$C_8$-Alkoxy)-carbonyl, ($C_2$-$C_8$-Alkenyloxy)-carbonyl, ($C_1$-$C_8$-Alkylthio)-carbonyl, ($C_2$-$C_8$-Alkinyloxy)-carbonyl, ($C_1$-$C_8$-Alkyl)-carbonyl, ($C_2$-$C_8$-Alkenyl)-carbonyl, ($C_2$-$C_8$-Alkinyl)-carbonyl, 1-(Hydroxyimino)-$C_1$-$C_6$-alkyl, 1-($C_1$-$C_4$-Alkylimino)-$C_1$-$C_6$-alkyl, 1-($C_1$-$C_4$-Alkoxyimino)-$C_1$-$C_6$-alkyl, ($C_1$-$C_8$-Alkyl)-carbonylamino, ($C_2$-$C_8$-Alkenyl)-carbonylamino, ($C_2$-$C_8$-Alkinyl)-carbonylamino, Aminocarbonyl, ($C_1$-$C_8$-Alkyl)-aminocarbonyl, Di-($C_1$-$C_6$-alkyl)-aminocarbonyl, ($C_2$-$C_6$-Alkenyl)-aminocarbonyl, ($C_2$-$C_6$-Alkinyl)-aminocarbonyl, ($C_1$-$C_8$-Alkoxy)-carbonylamino, ($C_1$-$C_8$-Alkyl)-amino-carbonylamino, $C_1$-$C_6$-Alkylcarbonyloxy, das unsubstituiert oder durch Halogen, $NO_2$, $C_1$-$C_4$-Alkoxy oder gegebenenfalls substituiertes Phenyl substituiert ist, ($C_2$-$C_6$-Alkenyl)-carbonyloxy, ($C_2$-$C_6$-Alkinyl)-carbonyloxy, $C_1$-$C_8$-Alkylsulfonyl, Phenyl, Phenyl-$C_1$-$C_6$-alkoxy, Phenyl-($C_1$-$C_6$-alkoxy)-carbonyl, Phenoxy, Phenoxy-$C_1$-$C_6$-alkoxy, Phenoxy-($C_1$-$C_6$-alkoxy)-carbonyl, Phenylcarbonyloxy, Phenylcarbonylamino, Phenyl-($C_1$-$C_6$-alkyl)-carbonylamino, wobei die letztgenannten 9 Reste im Phenylring unsubstituiert oder ein- oder mehrfach durch Reste aus der Gruppe Halogen, $C_1$-$C_4$-Alkyl, $C_1$-$C_4$-Alkoxy, $C_1$-$C_4$-Halogenalkyl, $C_1$-$C_4$-Halogenalkoxy und Nitro substituiert sind, und Reste der Formeln $-SiR'_3$, $-O-SiR'_3$, $(R')_3Si-C_1-C_6$-alkoxy, $-CO-O-NR'_2$, $-O-N=CR'_2$, $-N=CR'_2$, $-O-NR'_2$, $-CH(OR')_2$ und $-O-(CH_2)_m-CH(OR')_2$, worin die R' in den genannten Formeln unabhängig voneinander Wasserstoff, $C_1$-$C_4$-Alkyl oder Phenyl, das unsubstituiert oder ein- oder mehrfach durch Reste aus der Gruppe Halogen, $C_1$-$C_4$-Alkyl, $C_1$-$C_4$-Alkoxy, $C_1$-$C_4$-Halogenalkyl, $C_1$-$C_4$-Halogenalkoxy und Nitro substituiert ist, oder paarweise eine $C_2$-$C_6$-Alkylenkette und m = 0 bis 6 bedeuten, und einen Alkoxyrest der Formel R''O-CHR'''(OR'')-$C_1$-$C_6$-alkoxy, worin die R'' unabhängig voneinander $C_1$-$C_4$-Alkyl oder zusammen eine $C_1$-$C_6$-Alkylengruppe und R''' Wasserstoff oder $C_1$-$C_4$-Alkyl bedeuten, substituiert ist,
n eine ganze Zahl von 1 bis 5 und
W ein divalenter heterocyclischer Rest mit 5 Ringatomen der Formel W4 ist,

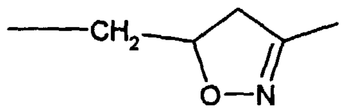

(W4)

in einer wirksamen Menge enthalten.

**2.** Mittel nach Anspruch 1, dadurch gekennzeichnet, daß

$R^1$ Wasserstoff, $C_1$-$C_{12}$-Alkyl, $C_3$-$C_7$-Cycloalkyl, $C_2$-$C_8$-Alkenyl oder $C_2$-$C_8$-Alkinyl ist, wobei jeder der vorstehenden C-haltigen Reste unabhängig voneinander unsubstituiert oder ein- oder mehrfach durch Halogen oder ein- oder zweifach, vorzugsweise bis zu einfach durch Reste aus der Gruppe enthaltend Hydroxy, $C_1$-$C_4$-Alkoxy, $C_1$-$C_4$-Alkylthio, $C_2$-$C_4$-Alkenyloxy, $C_2$-$C_4$-Alkinyloxy, Mono- und Di-($C_1$-$C_2$-alkyl)-amino, ($C_1$-$C_4$-Alkoxy)-carbonyl, ($C_2$-$C_4$-Alkenyloxy)-carbonyl, ($C_2$-$C_4$-Alkinyloxy)-carbonyl, ($C_1$-$C_4$-Alkyl)-carbonyl, ($C_2$-$C_4$-Alkenyl)-carbonyl, ($C_2$-$C_4$-Alkinyl)-carbonyl, 1-(Hydroxyimino)-$C_1$-$C_4$-alkyl, 1-($C_1$-$C_4$-Alkylimino)-$C_1$-$C_4$-alkyl, 1-($C_1$-$C_4$-Alkoxyimino)-$C_1$-$C_4$-alkyl, $C_1$-$C_4$-Alkylsulfonyl, Phenyl, Phenyl-$C_1$-$C_4$-alkoxy, Phenyl-($C_1$-$C_4$-alkoxy)-carbonyl, Phenoxy, Phenoxy-$C_1$-$C_4$-alkoxy, Phenoxy-($C_1$-$C_4$-alkoxy)-carbonyl, wobei die letztgenannten 6 Reste im Phenylring unsubstituiert oder ein- oder mehrfach durch Reste aus der Gruppe Halogen, $C_1$-$C_2$-Alkyl, $C_1$-$C_2$-Alkoxy, $C_1$-$C_2$-Halogenalkyl, $C_1$-$C_2$-Halogenalkoxy und Nitro substituiert sind, und Reste der Formeln $-SiR'_3$, $-O-N=CR'_2$, $-N=CR'_2$ und $-O-NR'_2$, worin die R' in den genannten Formeln unabhängig voneinander Wasserstoff, $C_1$-$C_2$-Alkyl oder Phenyl, das unsubstituiert oder ein- oder mehrfach durch Reste aus der Gruppe Halogen, $C_1$-$C_2$-Alkyl, $C_1$-$C_2$-Alkoxy, $C_1$-$C_2$-Halogenalkyl, $C_1$-$C_2$-Halogenalkoxy und Nitro substituiert ist, oder paarweise eine $C_4$-$C_5$-Alkylenkette bedeuten, substituiert ist.

**3.** Mittel nach Anspruch 1 oder 2, dadurch gekennzeichnet, daß

X Wasserstoff, Halogen, Nitro oder $C_1$-$C_4$-Halogenalkyl ist,
n eine Zahl von 1 bis 3 ist,
Z ein Rest der Formel $OR^1$ ist,
$R^1$ Wasserstoff, $C_1$-$C_8$-Alkyl oder $C_3$-$C_7$-Cycloalkyl ist, wobei jeder der vorstehenden C-haltigen Reste unabhängig voneinander unsubstituiert oder ein- oder mehrfach durch Reste aus der Gruppe Halogen oder ein- oder zweifach, vorzugsweise unsubstituiert oder einfach, durch Reste aus der Gruppe Hydroxy, $C_1$-$C_4$-Alkoxy, ($C_1$-$C_4$-Alkoxy)-carbonyl, $C_2$-$C_6$-Alkenyloxy-carbonyl, ($C_2$-$C_6$-Alkinyloxy)-carbonyl, 1-(Hydroxyimino)-$C_1$-$C_4$-alkyl, 1-($C_1$-$C_4$-Alkylimino)-$C_1$-$C_4$-alkyl, 1-($C_1$-$C_4$-Alkoxyimino)-$C_1$-$C_4$-alkyl, und Reste der Formeln $-SiR'_3$, $-O-N=CR'_2$, $-N=CR'_2$ und $-O-NR'_2$, worin die R' in den genannten Formeln unabhängig voneinander Wasserstoff oder $C_1$-$C_4$-Alkyl oder paarweise eine $C_4$-$C_5$-Alkylenkette bedeuten, substituiert ist, bedeuten.

**4.** Mittel nach einem der Ansprüche 1 bis 3, dadurch gekennzeichnet, daß

X Wasserstoff, Halogen, Nitro, $C_1$-$C_4$-Alkyl, $C_1$-$C_2$-Halogenalkyl,
n 1 bis 3,
Z ein Rest der Formel $OR^1$,
$R^1$ Wasserstoff, $C_1$-$C_4$-Alkyl, oder ($C_1$-$C_4$-Alkoxy)-carbonyl-$C_1$-$C_4$-alkyl,

bedeuten.

**5.** Mittel nach einem der Ansprüche 1 bis 4, dadurch gekennzeichnet, daß sie ein oder mehrere Herbizide aus der Gruppe enthaltend Phenylsulfonylharnstoffe, Thienylsulfonylharnstoffe, Pyrazolsulfonylharnstoffe, Sulfondiamidderivate, Pyridylsulfonylharnstoffe, Phenoxysulfonylharnstoffe und Imidazolinone enthalten.

**6.** Mittel nach einem der Ansprüche 1 bis 5, dadurch gekennzeichnet, daß sie ein oder mehrere Herbizide aus der Gruppe enthaltend Chlorimuron-ethyl, Nicosulfuron, DPX-E 9636, Amidosulfuron, Thiameturon-methyl, Primisulfuron, Pyridylsulfonylharnstoffe der Formel A1 oder deren Salze,

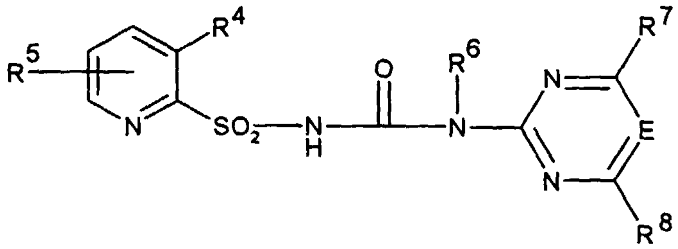

(A1)

worin

E CH oder N

$R^4$ Iod oder $NR^9R^{10}$,

$R^5$ H, Halogen, Cyano, $C_1$-$C_3$-Alkyl, $C_1$-$C_3$-Alkoxy, $C_1$-$C_3$-Haloalkyl, $C_1$-$C_3$-Haloalkoxy, $C_1$-$C_3$-Alkylthio, ($C_1$-$C_3$-Alkoxy)-$C_1$-$C_3$-alkyl, ($C_1$-$C_3$-Alkoxy)-carbonyl, Mono- oder Di-($C_1$-$C_3$-alkyl)-amino, $C_1$-$C_3$-Alkyl-sulfinyl oder -sulfonyl, $SO_2$-$NR^aR^b$ oder CO-$NR^aR^b$,

$R^a$,$R^b$ unabhängig voneinander H, $C_1$-$C_3$-Alkyl, $C_1$-$C_3$-Alkenyl, $C_1$-$C_3$-Alkinyl oder zusammen $-(CH_2)_4-$, $-(CH_2)_5-$ oder $-(CH_2)_2-O-(CH_2)_2-$,

$R^6$ H oder $CH_3$,

$R^7$ Halogen, $C_1$-$C_2$-Alkyl, $C_1$-$C_2$-Alkoxy, $C_1$-$C_2$-Haloalkyl, $C_1$-$C_2$-Haloalkoxy oder $OCH_2CF_3$,

$R^8$ $C_1$-$C_2$-Alkyl, $C_1$-$C_2$-Haloalkoxy oder $C_1$-$C_2$-Alkoxy und

$R^9$ $C_1$-$C_4$-Alkyl und $R^{10}$ $C_1$-$C_4$-Alkylsulfonyl oder $R^9$ und $R^{10}$ gemeinsam eine Kette der Formel $-(CH_2)_3SO_2-$ oder $-(CH_2)_4SO_2-$,

Alkoxyphenoxysulfonylharnstoffe der Formel A2 oder deren Salze,

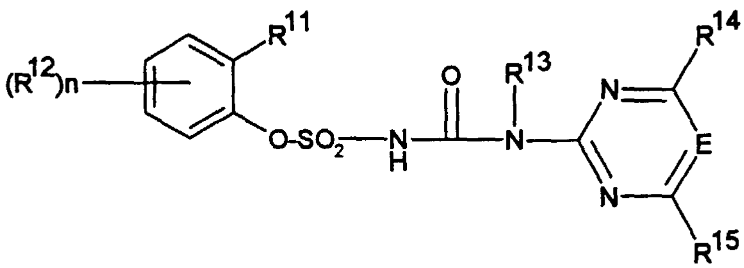

(A2)

worin

E CH oder N,

$R^{11}$ Ethoxy, Propoxy oder Isopropoxy,

$R^{12}$ Wasserstoff, Halogen, $NO_2$, $CF_3$, CN, $C_1$-$C_4$-Alkyl, $C_1$-$C_4$-Alkoxy, $C_1$-$C_4$-Alkylthio oder ($C_1$-$C_3$-Alkoxy)-carbonyl,

n 1, 2 oder 3,

$R^{13}$ Wasserstoff, $C_1$-$C_4$-Alkyl oder $C_3$-$C_4$-Alkenyl,

$R^{14}$, $R^{15}$ unabhängig voneinander Halogen, $C_1$-$C_2$-Alkyl, $C_1$-$C_2$-Alkoxy, $C_1$-$C_2$-Haloalkyl, $C_1$-$C_2$-Haloalkoxy oder ($C_1$-$C_2$-Alkoxy)-$C_1$-$C_2$-alkyl,

bedeuten,

3-(4-Ethyl-6-methoxy-1,3,5-triazin-2-yl)-1-(2,3-dihydro-1,1-dioxo-2-methylbenzo[b]thiophen-7-sulfonyl)-harnstoff,
3-(4-Ethoxy-6-ethyl-1,3,5-triazin-2-yl)-1-(2,3-dihydro-1,1-dioxo-2-methylbenzo[b]thiophen-7-sulfonyl)-harnstoff,
Imazethapyr, Imazaquin und Imazethamethabenz enthalten.

**7.** Mittel nach einem der Ansprüche 1 bis 6, dadurch gekennzeichnet, daß das Gewichtsverhältnis Safener:Herbizid im Bereich von 1:10 bis 10:1 liegen.

**8.** Mittel nach einem der Ansprüche 1 bis 7, dadurch gekennzeichnet, daß sie 0,1 bis 99 Gewichtsprozent Wirkstoffe des Typs B) oder des Antidot/Herbizid-Wirkstoffgemischs A) und B) und 1 bis 99,9 Gew.-% eines festen oder flüssigen Zusatzstoffes und 0 bis 25 Gew.-% eines Tensides enthalten.

**9.** Verfahren zum Schutz von Kulturpflanzen vor phytotoxischen Nebenwirkungen von Herbiziden des Typs A), wie sie in einem der Ansprüche 1, 5 und 6 definiert sind, dadurch gekennzeichnet ist, daß eine wirksame Menge einer oder mehrerer Verbindungen der Formel (B1), wie sie in einem der Ansprüche 1 bis 4 definiert sind, vor, nach oder gleichzeitig mit dem Herbizid es Typs A), auf die Pflanzen, Pflanzensamen oder die Anbaufläche appliziert wird.

**10.** Verfahren nach Anspruch 9, dadurch gekennzeichnet, daß die Kulturpflanzen Getreidepflanzen oder Maispflanzen sind.

**Claims**

**1.** A herbicidal composition which comprises an effective amount of

A) one or more herbicides selected from the group of the sulfonylureas and imidazolinones and
B) one or more compounds of the formula B1,

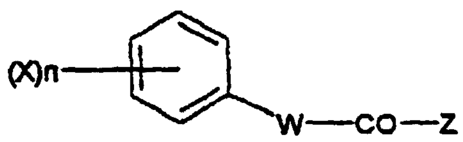

(B1)

in which

X is hydrogen, halogen, $C_1$-$C_4$-alkyl, $C_1$-$C_4$-alkoxy, nitro or $C_1$-$C_4$-haloalkyl,
Z is $OR^1$ or $SR^1$,
$R^1$ is hydrogen, $C_1$-$C_{18}$-alkyl, $C_3$-$C_{12}$-cycloalkyl, $C_2$-$C_8$-alkenyl or $C_2$-$C_8$-alkynyl, where each of the above carbon-containing radicals independently of each other is unsubstituted or monosubstituted or polysubstituted by radicals selected from the group comprising halogen, hydroxyl, $C_1$-$C_8$-alkoxy, $C_1$-$C_8$-alkylthio, $C_2$-$C_8$-alkenylthio, $C_2$-$C_8$-alkynylthio, $C_2$-$C_8$-alkenyloxy, $C_2$-$C_8$-alkynyloxy, $C_3$-$C_7$-cycloalkyl, $C_3$-$C_7$-cycloalkoxy, cyano, mono- and di-($C_1$-$C_4$-alkyl)amino, ($C_1$-$C_8$-alkoxy)carbonyl, ($C_2$-$C_8$-alkenyloxy)carbonyl, ($C_1$-$C_6$-alkylthio)-carbonyl, ($C_2$-$C_8$-alkynyloxy)carbonyl, ($C_1$-$C_8$-alkyl)carbonyl, ($C_2$-$C_8$-alkenyl)carbonyl, ($C_2$-$c_8$-alkynyl)carbonyl, 1-(hydroxyimino)-$C_1$-$C_6$-alkyl, 1-($C_1$-$C_4$-alkylimino)-$C_1$-$C_6$-alkyl, 1-($C_1$-$C_4$-alkoxyimino)-$C_1$-$C_6$-alkyl, ($C_1$-$C_8$-alkyl)carbonylamino, ($C_2$-$C_8$-alkenyl)carbonyl-amino, ($C_2$-$C_8$-alkynyl)carbonylamino, aminocarbonyl, ($C_1$-$C_8$-alkyl)aminocarbonyl, di-($C_1$-$C_6$-alkyl)aminocarbonyl, ($C_2$-$C_6$-alkenyl)-aminocarbonyl, ($C_2$-$C_6$- alkynyl)aminocarbonyl, ($C_1$-$C_8$-alkoxy)carbonylamino, ($C_1$-$C_8$-alkyl)-aminocarbonylamino, $C_1$-$C_6$-alkylcarbonyloxy which is unsubstituted or substituted by halogen, $NO_2$, $C_1$-$C_4$-alkoxy or optionally substituted phenyl, ($C_2$-$C_6$-alkenyl)carbonyloxy, ($C_2$-$C_6$-alkynyl) carbonyloxy, $C_1$-$C_8$-alkylsulfonyl, phenyl, phenyl-$C_1$-$C_6$-alkoxy, phenyl-($C_1$-$C_6$-alkoxy)carbonyl, phenoxy, phenoxy-$C_1$-$C_6$-alkoxy, phenoxy-($C_1$-$C_6$-alkoxy)carbonyl, phenylcarbonyloxy, phenylcarbonylamino, phenyl-($C_1$-$C_6$-alkyl)carbonylamino, where the 9 last-mentioned radicals in the phenyl ring are unsubstituted or monosubstituted or polysubstituted by radicals selected from the group comprising halogen, $C_1$-$C_4$-alkyl, $C_1$-$C_4$-alkoxy, $C_1$-$C_4$-haloalkyl, $C_1$-$C_4$-haloalkoxy and nitro, and radicals of the formulae $-SiR'_3$, $-O-SiR'_3$, $(R')_3Si-C_1-C_6$-alkoxy, $-CO-O-NR'_2$, $-O-N=CR'_2$, $-N=CR'_2$, $-O-NR'_2-CH(OR')_2$ and $-O-(CH_2)_m-CH(OR')_2$, where the R' radicals in the formulae mentioned independently of each other are hydrogen, $C_1$-$C_4$-alkyl or phenyl which is unsubstituted or monosubstituted or polysubstituted by radicals selected from the group comprising halogen, $C_1$-$C_4$-alkyl, $C_1$-$C_4$-alkoxy, $C_1$-$C_4$-haloalkyl, $C_1$-$C_4$-haloalkoxy and nitro, or, in pairs, are a $C_2$-$C_6$-alkylene chain and m = 0 to 6, and an alkoxy radical of the formula R''O-CHR'''(OR'')-$C_1$-$C_6$-alkoxy where the R'' radicals independently of each other are $C_1$-$C_4$-alkyl or together are a $C_1$-$C_6$-alkylene radical, and R''' is hydrogen or $C_1$-$C_4$-alkyl,
n is an integer from 1 to 5 and

W is a divalent heterocyclic radical having 5 ring atoms of the formula W4,

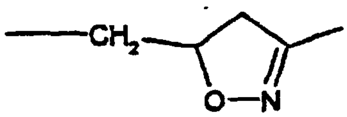

(W4).

**2.** A composition as claimed in claim 1, wherein

$R^1$ is hydrogen, $C_1$-$C_{12}$-alkyl, $C_3$-$C_7$-cycloalkyl, $C_2$-$C_8$-alkenyl or $C_2$-$C_8$-alkynyl, where each of the above carbon-containing radicals independently of each other is unsubstituted or monosubstituted or polysubstituted by halogen or monosubstituted or disubstituted, preferably up to monosubstituted, by radicals selected from the group comprising hydroxyl, $C_1$-$C_4$-alkoxy, $C_1$-$C_4$-alkylthio, $C_2$-$C_4$-alkenyloxy, $C_2$-$C_4$-alkynyloxy, mono- and di-($C_1$-$C_2$-alkyl) amino, ($C_1$-$C_4$-alkoxy) carbonyl, ($C_2$-$C_4$-alkenyloxy) carbonyl, ($C_2$-$C_4$-alkynyloxy) - carbonyl, ($C_1$-$C_4$-alkyl) carbonyl, ($C_2$-$C_4$-alkenyl)-carbonyl, ($C_2$-$C_4$-alkynyl) carbonyl, 1-(hydroxyimino)-$C_1$-$C_4$-alkyl, 1-($C_1$-$C_4$-alkylimino)-$C_1$-$C_4$-alkyl, 1-($C_1$-$C_4$-alkoxyimino)-$C_1$-$C_4$-alkyl, $C_1$-$C_4$-alkylsulfonyl, phenyl, phenyl-$C_1$-$C_4$-alkoxy, phenyl-($C_1$-$C_4$-alkoxy)carbonyl, phenoxy, phenoxy-$C_1$-$C_4$-alkoxy, phenoxy-($C_1$-$C_4$-alkoxy)carbonyl, where the 6 last-mentioned radicals are unsubstituted or monosubstituted or polysubstituted in the phenyl ring by radicals selected from the group comprising halogen, $C_1$-$C_2$-alkyl, $C_1$-$C_2$-alkoxy, $C_1$-$C_2$-haloalkyl, $C_1$-$C_2$-haloalkoxy and nitro, and radicals of the formulae $-SiR'_3$, $-O-N=CR'_2$, $-N=CR'_2$ and $-O-NR'_2$, where the R' radicals in the formulae mentioned independently of each other are hydrogen, $C_1$-$C_2$-alkyl or phenyl which is unsubstituted or monosubstituted or polysubstituted by radicals selected from the group comprising halogen, $C_1$-$C_2$-alkyl, $C_1$-$C_2$-alkoxy, $C_1$-$C_2$-haloalkyl, $C_1$-$C_2$-haloalkoxy and nitro, or, in pairs, are a $C_4$-$C_5$-alkylene chain.

**3.** A composition as claimed in claim 1 or 2, wherein

X is hydrogen, halogen, nitro or $C_1$-$C_4$-haloalkyl,
n is a number from 1 to 3,
Z is a radical of the formula $OR^1$,
$R^1$ is hydrogen, $C_1$-$C_8$-alkyl or $C_3$-$C_7$-cycloalkyl, where each of the above carbon-containing radicals independently of each other is unsubstituted or monosubstituted or polysubstituted by radicals selected from the group comprising halogen or monosubstituted or disubstituted, preferably unsubstituted or monosubstituted, by radicals selected from the group comprising hydroxyl, $C_1$-$C_4$-alkoxy, ($C_1$-$C_4$-alkoxy)carbonyl, $C_2$-$C_6$-alkenyloxycarbonyl, ($C_2$-$C_6$-alkynyloxy)carbonyl, 1-(hydroxyimino)-$C_1$-$C_4$-alkyl, 1-($C_1$-$C_4$-alkylimino)-$C_1$-$C_4$-alkyl, 1-($C_1$-$C_4$-alkoxyimino)-$C_1$-$C_4$-alkyl, and radicals of the formulae $-SiR'_3$, $-O-N=CR'_2$, $-N=CR'_2$ and $-O-NR'_2$, in which the R' radicals in the formulae mentioned independently of each other are hydrogen or $C_1$-$C_4$-alkyl or, in pairs, are a $C_4$-$C_5$-alkylene chain.

**4.** A composition as claimed in one of claims 1 to 3, wherein

X is hydrogen, halogen, nitro, $C_1$-$C_4$-alkyl, $C_1$-$C_2$-haloalkyl,
n is 1 to 3,
Z is a radical of the formula $OR^1$,
$R^1$ is hydrogen, $C_1$-$C_4$-alkyl, or ($C_1$-$C_4$-alkoxy)carbonyl-$C_1$-$C_4$-alkyl.

**5.** A composition as claimed in one of claims 1 to 4, which comprises one or more herbicides selected from the group comprising phenylsulfonylureas, thienylsulfonylureas, pyrazolesulfonylureas, sulfonediamide derivatives, pyridylsulfonylureas, phenoxysulfonylureas and imidazolinones.

**6.** A composition as claimed in one of claims 1 to 5, which comprises one or more herbicides selected from the group comprising chlorimuron-ethyl, nicosulfuron, DPX-E 9636, amidosulfuron, thiameturon-methyl, primisulfuron, pyridylsulfonylureas of the formula A1 or their salts,

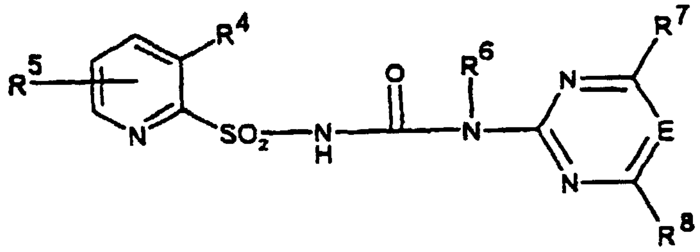

(A1)

in which

E is CH or N,

$R^4$ is iodine or $NR^9R^{10}$,

$R^5$ is H, halogen, cyano, $C_1$-$C_3$-alkyl, $C_1$-$C_3$-alkoxy, $C_1$-$C_3$-haloalkyl, $C_1$-$C_3$-haloalkoxy, $C_1$-$C_3$-alkylthio, ($C_1$-$C_3$-alkoxy)-$C_1$-$C_3$-alkyl, ($C_1$-$C_3$-alkoxy)carbonyl, mono- or di-($C_1$-$C_3$-alkyl)-amino, $C_1$-$C_3$-alkylsulfinyl or -sulfonyl, $SO_2$-$NR^aR^b$ or CO-$NR^aR^b$,

$R^a$ and $R^b$ independently of each other are H, $C_1$-$C_3$-alkyl, $C_1$-$C_3$-alkenyl, $C_1$-$C_3$-alkynyl or together are $-(CH_2)_4-$, $-(CH_2)_5-$ or $-(CH_2)_2-O-(CH_2)_2-$,

$R^6$ is H or $CH_3$,

$R^7$ is halogen, $C_1$-$C_2$-alkyl, $C_1$-$C_2$-alkoxy, $C_1$-$C_2$-haloalkyl, $C_1$-$C_2$-haloalkoxy or $OCH_2CF_3$,

$R^8$ is $C_1$-$C_2$-alkyl, $C_1$-$C_2$-haloalkoxy or $C_1$-$C_2$-alkoxy and

$R^9$ is $C_1$-$C_4$-alkyl and $R^{10}$ is $C_1$-$C_4$-alkylsulfonyl or $R^9$ and $R^{10}$ together are a chain of the formula $-(CH_2)_3SO_2-$ or $-(CH_2)_4SO_2-$,

alkoxyphenoxysulfonylureas of the formula A2 or their salts,

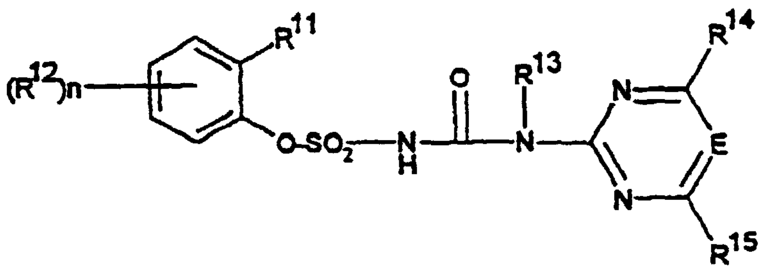

(A2)

in which

E is CH or N,

$R^{11}$ is ethoxy, propoxy or isopropoxy,

$R^{12}$ is hydrogen, halogen, $NO_2$, $CF_3$, CN, $C_1$-$C_4$-alkyl, $C_1$-$C_4$-alkoxy, $C_1$-$C_4$-alkylthio or ($C_1$-$C_3$-alkoxy)-carbonyl,

n is 1, 2 or 3,

$R^{13}$ is halogen, $C_1$-$C_4$-alkyl or $C_3$-$C_4$-alkenyl,

$R^{14}$ and $R^{15}$ independently of each other are halogen, $C_1$-$C_2$-alkyl, $C_1$-$C_2$-alkoxy, $C_1$-$C_2$-haloalkyl, $C_1$-$C_2$-haloalkoxy or ($C_1$-$C_2$-alkoxy)-$C_1$-$C_2$-alkyl,

3-(4-ethyl-6-methoxy-1,3,5-triazin-2-yl)-1-(2,3-dihydro-1,1-dioxo-2-methylbenzo[b]thiophen-7-sulfonyl)urea,
3-(4-ethoxy-6-ethyl-1,3,5-triazin-2-yl)-1-(2,3-dihydro-1,1-dioxo-2-methylbenzo[b]thiophen-7-sulfonyl)urea,
imazethapyr, imazaquin and imazethamethabenz.

**7.** A composition as claimed in one of claims 1 to 6, wherein the ratio by weight of safener:herbicide is in a range from 1:10 to 10:1.

**8.** A composition as claimed in one of claims 1 to 7, which comprises 0.1 to 99 percent by weight of active substances of the B) type or of the antidote/herbicide active substance mixture A) and B), and 1 to 99.9% by weight of a solid or liquid additive and 0 to 25% by weight of a surfactant.

**9.** A method of protecting crop plants against phytotoxic secondary effects of herbicides of the A) type as are defined in one of claims 1, 5 and 6, which comprises applying an effective amount of one or more compounds of the formula (B1), as are defined in one of claims 1 to 4, to the plants, seeds of the plants or the area under cultivation, before, after or simultaneously with the herbicide of the A) type.

**10.** A method as claimed in claim 9, wherein the crop plants are cereal plants or corn plants.

**Revendications**

**1.** Agents herbicides, caractérisés en ce qu'ils contiennent

A) un ou plusieurs herbicides pris dans le groupe constitué par les sulfonylurées et les imidazolinones et
B) un ou plusieurs composés de formule B1

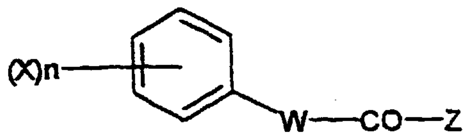

(B1)

où

X représente un atome d'hydrogène, un atome d'halogène, des groupes alkyle en $C_1$-$C_4$, alkoxy $C_1$-$C_4$, nitro ou halogénoalkyle en $C_1$-$C_4$,

Z représente des groupes $OR^1$ ou $SR^1$,

$R^1$ représente un atome d'hydrogène, des groupes alkyle en $C_1$-$C_{18}$, cycloalkyle en $C_3$-$C_{12}$, alcényle en $C_2$-$C_8$ ou alcynyle en $C_2$-$C_8$,
où chacun des restes carbonés précités pouvant être, indépendamment les uns des autres, non substitué ou substitué une ou plusieurs fois par des restes pris dans le groupe constitué par des atomes d'hydrogène, des groupes hydroxy, alkoxy en $C_1$-$C_8$, (alkyl en $C_1$-$C_8$)thio, (alcényl en $C_2$-$C_8$)thio, (alcynyl en $C_2$-$C_8$)thio, alcényloxy en $C_2$-$C_8$, alcynyloxy en $C_2$-$C_8$, cycloalkyle en $C_3$-$C_7$, cycloalkoxy en $C_3$-$C_7$, cyano, mono- et di(alkyl en $C_1$-$C_4$)amino, (alkoxy en $C_1$-$C_8$)carbonyle, (alcényloxy en $C_2$-$C_8$)carbonyle, (alkyl en $C_1$-$C_8$)thiocarbonyle, (alcynyloxy en $C_2$-$C_8$)carbonyle, (alkyl an $C_1$-$C_8$)carbonyle, (alcényl en $C_2$-$C_8$)carbonyle, (alcynyl en $C_2$-$C_8$)carbonyle, 1-(hydroxyimino)-alkyle en $C_1$-$C_6$, 1-(alkylimino en $C_1$-$C_4$)-alkyle en $C_1$-$C_6$, 1-(alkoxyimino en $C_1$-$C_4$)alkyle en $C_1$-$C_6$, (alkyl en $C_1$-$C_8$)carbonylamino, (alcényl en $C_2$-$C_8$)carbonylamino, (alcynyl en $C_2$-$C_8$)carbonylamino, aminocarbonyle, (alkyl en $C_1$-$C_8$)aminocarbonyle, di-(alkyl en $C_1$-$C_6$)aminocarbonyle, (alcényl an $C_2$-$C_6$)aminocarbonyle, (alcynyl en $C_2$-$C_6$)aminocarbonyle, (alkoxy en $C_1$-$C_8$)-carbonylamino, (alkyl en $C_1$-$C_8$)-aminocarbonylamino, (alkyl en $C_1$-$C_6$)-carbonyloxy, lequel est non substitué ou substitué par des atomes d'halogènes, des groupes $NO_2$, alkoxy an $C_1$-$C_4$ ou par un groupe phényle éventuellement substitué, (alcényl en $C_2$-$C_6$)-carbonyloxy, (alcynyl en $C_2$-$C_6$)-carbonyloxy, (alkyl en $C_1$-$C_8$)sulfonyle, phényle, phénylalkoxy en $C_1$-$C_6$, phényl(alkoxy en $C_1$-$C_6$)carbonyle, phénoxy, phénoxyalkoxy en $C_1$-$C_6$, phénoxy(alkoxy en $C_1$-$C_6$)carbonyle, phénylcarbonyloxy, phénylcarbonylamino, phényl(alkyl en $C_1$-$C_6$)carbonylamino, les 9 derniers restes cités sont non substitués ou susbtitués dans le cycle phényle une ou plusieurs fois par des restes pris dans le groupe constitué par des atomes d'halogènes, des groupes alkyle an $C_1$-$C_4$, alkoxy $C_1$-$C_4$, halogénoalkyle en $C_1$-$C_4$, halogénoalkoxy en $C_1$-$C_4$ et nitro, et des restes dans les formules $-SiR'_3$, $-O-SiR'_3$, $(R')_3Si$-alkoxy en $C_1$-$C_6$, $-CO-O-NR'_2$, $-O-N=CR'_2$, $-N=CR'_2$, $-O-NR'_2$, $-CH(OR')_2$ et $-O-(CH_2)_m-CH(OR')_2$, où R' dans les formules précitées représentent, indépendamment les un des autres, des atomes d'hydrogène, des groupes alkyle en $C_1$-$C_4$ ou phényle, lequel est non substitué ou substitué une ou plusieurs fois par des restes pris dans le groupe constitué par des atomes d'halogènes, des groupes alkyle en $C_1$-$C_4$, alkoxy $C_1$-$C_4$, halogénoalkyle en $C_1$-$C_4$, halogénoalkoxy en $C_1$-$C_4$ et nitro, ou par paires, représentent une chaîne alkylène en $C_2$-$C_6$ et m = 0 à 6, et un reste alkoxy de formule R''O-CHR'''(OR'')-alkoxy en $C_1$-$C_6$, où R'' représentent, indépendamment les uns des autres, des

groupes alkyle en $C_1$-$C_4$ ou conjointement un groupe alkylène en $C_1$-$C_6$ et R''' représente un atome d'hydrogène ou un groupe alkyle en $C_1$-$C_4$,

n est un entier de 1 à 5 et

W représente un reste hétérocyclique bivalent à 5 chaînons de formule W4

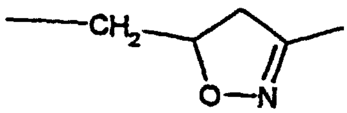

(W4)

en une quantité efficace.

**2.** Agents selon la revendication 1, caractérisés en ce que

$R^1$ représente un atome d'hydrogène, des groupes alkyle en $C_1$-$C_{12}$, cycloalkyle en $C_3$-$C_7$, alcényle en $C_2$-$C_8$ ou alcynyle en $C_2$-$C_8$, où chacun des restes carbonés précités, indépendamment les uns des autres, est non substitué ou substitué une ou plusieurs fois par des atomes d'halogènes ou une ou deux fois, de préférence jusqu'à une fois par des restes pris dans le groupe constitué par des restes hydroxy, alkoxy en $C_1$-$C_4$, (alkyl en $C_1$-$C_4$)thio, alcényloxy en $C_2$-$C_4$, alcynyloxy en $C_2$-$C_4$, mono- et di(alkyl en $C_1$-$C_2$)amino, (alkoxy en $C_1$-$C_4$)-carbonyle, (alcényloxy en $C_2$-$C_4$)carbonyle, (alcynyloxy en $C_2$-$C_4$)carbonyle, (alkyl en $C_1$-$C_4$)-carbonyle, (alcényl en $C_2$-$C_4$)carbonyle, (alcynyl en $C_2$-$C_4$)carbonyle, 1-(hydroxyimino)-alkyle en $C_1$-$C_4$, 1-(alkylimino en $C_1$-$C_4$)-alkyle en $C_1$-$C_4$, 1-(alkoxyimino en $C_1$-$C_4$)-alkyle en $C_1$-$C_4$, (alkyl en $C_1$-$C_4$)-sulfonyle, phényle, phénylalkoxy en $C_1$-$C_4$, phényl(alkoxy en $C_1$-$C_4$)carbonyle, phénoxy, phénoxyalkoxy en $C_1$-$C_4$, phénoxy(alkoxy en $C_1$-$C_4$)carbonyle, les 6 derniers restes cités sont non substitués ou susbtitués dans le cycle phényle ou substitués une ou plusieurs fois par des restes pris dans le groupe constitué par des atomes d'halogènes, des groupes alkyle en $C_1$-$C_2$, alkoxy $C_1$-$C_2$, halogénoalkyle en $C_1$-$C_2$, halogénoalkoxy en $C_1$-$C_2$ et nitro, et des restes dans les formules $-SiR'_3$ , $-O-N=CR'_2$ , $-N=CR'_2$ et $-O-NR'_2$ , où R' dans les formules précitées représentent, indépendamment les un des autres, des atomes d'hydrogène, des groupes alkyle en $C_1$-$C_2$ ou phényle, lequel est non substitué ou substitué une ou plusieurs fois par des restes pris dans le groupe constitué par des atomes d'halogènes, des groupes alkyle en $C_1$-$C_2$, alkoxy $C_1$-$C_2$, halogénoalkyle en $C_1$-$C_2$, halogénoalkoxy en $C_1$-$C_2$ et nitro, ou par paires, représentent une chaîne alkylène en $C_4$-$C_5$.

**3.** Agents selon la revendication 1 ou 2, caractérisés en ce que

X représente un atome d'hydrogène, un atome d'halogène, des groupes nitro ou halogénoalkyle en $C_1$-$C_4$,

n va de 1 à 3,

Z représente un reste de formule $OR^1$,

$R^1$ représente un atome d'hydrogène, des groupes alkyle en $C_1$-$C_8$ ou cycloalkyle en $C_3$-$C_7$, où chacun des restes carbonés précités est, indépendamment les uns des autres, non substitué ou substitué une ou plusieurs fois par des restes pris dans le groupe constitué par des atomes d'halogènes, ou substitué une ou deux fois, de préférence est non substitué ou substitué une fois par des restes pris dans le groupe constitué par des groupes hydroxy, alkoxy en $C_1$-$C_4$, (alkoxy en $C_1$-$C_4$)carbonyle, (alcényloxy en $C_2$-$C_6$)carbonyle, (alcynyloxy en $C_2$-$C_6$)-carbonyle, 1-(hydroxyimino)alkyle en $C_1$-$C_4$, 1-(alkylimino en $C_1$-$C_4$)-alkyle en $C_1$-$C_4$, 1-(alkoxyimino en $C_1$-$C_4$)-alkyle en $C_1$-$C_4$ et des restes de formules $-SiR'_3$ , $-O-N=CR'_2$ , $-N=CR'_2$ et $-O-NR'_2$ , où R' dans les formules précitées représentent, indépendamment les un des autres, des atomes d'hydrogène ou des groupes alkyle en $C_1$-$C_4$ ou par paires, représentent une chaîne alkylène en $C_4$-$C_5$.

**4.** Agents selon l'une des revendications 1 à 3, caractérisés en ce que

X représente un atome d'hydrogène, un atome d'halogène, des groupes nitro, alkyle en $C_1$-$C_4$, halogénoalkyle en $C_1$-$C_2$,

n va de 1 à 3,

Z représente un reste de formule $OR^1$,

$R^1$ représente un atome d'hydrogène, des groupes alkyle en $C_1$-$C_4$ ou (alkoxy en $C_1$-$C_4$)carbonylalkyle en $C_1$-$C_4$.

**5.** Agents selon l'une des revendications 1 à 4, caractérisés en ce qu'ils contiennent un ou plusieurs herbicides pris dans le groupe constitué par des phénylsulfonylurées, des thiénylsulfonylurées, des pyrazolsulfonylurées, des dérivés de sulfone diamide, des pyridylsulfonylurées, des phénoxysulfonylurées et des imidazolinones.

**6.** Agents selon l'une des revendications 1 à 5, caractérisés en ce qu'ils contiennent un ou plusieurs herbicides pris dans le groupe comportant chlorimunoethyl, nicosulfuron, DPX-E 9636, amidosulfuron, thiameturon-methyl, primisulfuron, pyridylsulfonylurées de formule A1 ou leurs sels

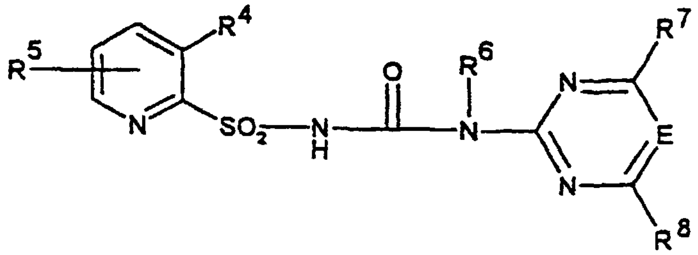

(A1)

où

E représente CH ou N,

$R^4$ représente un atome d' iode ou un groupe $NR^9R^{10}$,

$R^5$ représente un atome d' hydrogène, un atome d'halogène, des groupes cyano, alkyle en $C_1$-$C_3$, alkoxy en $C_1$-$C_3$, haloalkyle en $C_1$-$C_3$, haloalkoxy en $C_1$-$C_3$, (alkyl en $C_1$-$C_3$)thio, (alkoxy en $C_1$-$C_3$)-alkyle en $C_1$-$C_3$, (alkoxy en $C_1$-$C_3$)-carbonyle, mono- ou di-(alkyl en $C_1$-$C_3$)-amino, (alkyl en $C_1$-$C_3$)sulfinyle ou -sulfonyle, $SO_2$-$NR^aR^b$ ou CO-$NR^aR^b$,

$R^a$, $R^b$ représentent, indépendamment l'un de l'autre, un atome d'hydrogène, des groupes alkyle en $C_1$-$C_3$, alcényle en $C_1$-$C_3$, alcynyle en $C_1$-$C_3$ ou conjointement représentent $-(CH_2)_4-$, $-(CH_2)_5-$ ou $-(CH_2)_2-O-(CH_2)_2-$,

$R^6$ représente un atome d'hydrogène ou $CH_3$,

$R^7$ représente un atome d'halogène, des groupes alkyle en $C_1$-$C_2$, alkoxy en $C_1$-$C_2$, haloalkyle en $C_1$-$C_2$, haloalkoxy en $C_1$-$C_2$ ou $OCH_2CF_3$,

$R^8$ représente des groupes alkyle en $C_1$-$C_2$, haloalkoxy en $C_1$-$C_2$ ou alkoxy en $C_1$-$C_2$, et

$R^9$ représente un groupe alkyle en $C_1$-$C_4$ et

$R^{10}$ représente un groupe (alkyl en $C_1$-$C_4$)sulfonyle ou

$R^9$ et $R^{10}$ forment ensemble une chaîne de formule $-(CH_2)_3SO_2-$ ou $-(CH_2)_4-SO_2-$,

alkoxyphénoxysulfonylurées de formule A2 ou leurs sels

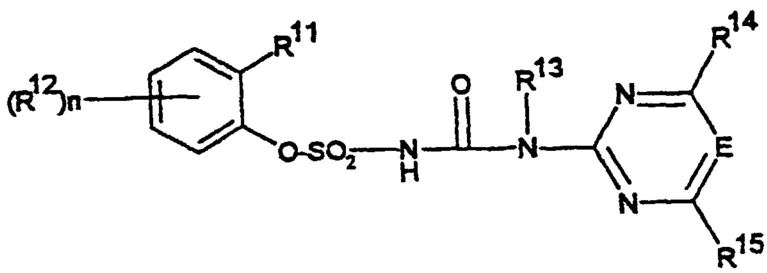

(A2)

où

E représente CH ou N,

$R^{11}$ représente des groupes éthoxy, propoxy ou isopropoxy,
$R^{12}$ représente un atome d'hydrogène, un atome d'halogène, des groupes $NO_2$, $CF_3$, CN, alkyle en $C_1$-$C_4$, alkoxy en $C_1$-$C_4$, (alkyl en $C_1$-$C_4$)thio ou (alkoxy en $C_1$-$C_3$)-carbonyle,
n vaut 1, 2 ou 3,
$R^{13}$ représente un atome d' hydrogène, un groupe alkyle en $C_1$-$C_4$ ou alcényle en $C_3$-$C_4$,
$R^{14}$, $R^{15}$ représentent, indépendamment l'un de l'autre, un atome d'halogène, des groupes alkyle en $C_1$-$C_2$, alkoxy en $C_1$-$C_2$, haloalkyle en $C_1$-$C_2$, haloalkoxy en $C_1$-$C_2$ ou (alkoxy on $C_1$-$C_2$)-alkyle en $C_1$-$C_2$,

3-(4-éthyl-6-méthoxy-1,3,5-triazin-2-yl)-1-(2,3-dihydro-1,1-dioxo-2-méthylbenzo[b]thiophén-7-sulfonyl)-urée, 3-(4-éthoxy-6-éthyl-1,3,5-triazin-2-yl)-1-(2,3-dihydro-1,1-dioxo-2-méthylbenzo[b]thiophén-7-sulfonyl)-urée, imazethapyr, imazaquin et imazethamethabenz.

**7.** Agents selon l'une des revendications 1 à 6, caractérisés en ce que le rapport pondéral antidote:herbicide se trouve dans le domaine de 1:10 à 10:1.

**8.** Agents selon l'une des revendications 1 à 7, caractérisés en ce qu'il contiennent de 0,1 à 99% massiques de substances actives du type B) ou du mélange antidote/substance active herbicide A) et B) et de 1 à 99,9% massiques d'une matière d'addition solide ou liquide et de 0 à 25% massiques d'une agent de surface.

**9.** Procédé pour la protection de cultures végétales contre les effets secondaires phytotoxiques des herbicides du type A), tels que définis aux revendications 1, 5 et 6, caractérisé en ce qu'on applique une quantité efficace d'un ou plusieurs composés de formule (B1), tels que définis aux revendications 1 à 4, avant, après ou on même temps que l'herbicide du type A), sur les plantes, la semence des plantes ou la surface cultivable.

**10.** Procédé selon la revendication 9, caractérisé en ce que les cultures végétales sont les céréales ou le maïs.